# EUROPÄISCHE PATENTSCHRIFT

(11) **EP 2 731 707 B1**
(45) Veröffentlichungstag und Bekanntmachung des Hinweises auf die Patenterteilung: **08.03.2017**
(21) Anmeldenummer: 12740533.0
(22) Anmeldetag: 13.07.2012
(51) Int. Cl.: B01J 20/28, B01J 20/32, B01J 20/18, B01J 20/20, B01J 20/26, B01J 20/16

(54) **ADSORPTIONSVLIES ZUR ADSORPTION VON PETROCHEMISCHEN SUBSTANZEN AUS FLÜSSIGEN PHASEN UND VERFAHREN ZUR HERSTELLUNG EINES ADSORPTIONSVLIESES**
ADSORPTION WEB FOR THE ADSORPTION OF PETROCHEMICAL SUBSTANCES FROM LIQUID PHASES AND METHOD FOR PRODUCING AN ADSORPTION WEB
NON-TISSÉ D'ADSORPTION POUR ADSORBER DES SUBSTANCES PÉTROCHIMIQUES CONTENUES DANS DES PHASES LIQUIDES ET PROCÉDÉ DE PRODUCTION D'UN NON-TISSÉ D'ADSORPTION

(30) Priorität: 15.07.2011 DE 102011051888
(43) Veröffentlichungstag der Anmeldung: 21.05.2014
(73) Patentinhaber: Margraf-Gerdau, Vera, 45721 Haltern am See (DE)
(72) Erfinder: GERDAU, Herbert, 45721 Haltern am See (DE)
(74) Vertreter: Rohmann, Michael
(86) Internationale Anmeldenummer: PCT/EP2012/063843
(87) Internationale Veröffentlichungsnummer: WO 2013/010960

(56) Entgegenhaltungen:
- EP-A1- 0 587 293
- EP-A1- 2 060 535
- EP-A2- 0 392 528
- WO-A1-97/06222
- WO-A1-98/11156
- DE-A1- 2 938 234
- DE-A1- 4 134 222

## Beschreibung

Die Erfindung betrifft ein Adsorptionsvlies zur Adsorption von petrochemischen Substanzen aus flüssigen Phasen mit zumindest einem Vlies. Weiterhin betrifft die Erfindung ein Verfahren zur Herstellung eines Adsorptionsvlieses.

Mittel zur Adsorption von petrochemischen Stoffen sind aus der Praxis grundsätzlich bekannt. Dabei hat es sich beispielsweise bewährt, poröse Partikel auszubringen und nach dem Diffundieren der petrochemischen Substanzen in die Poren dieser Partikel wieder einzusammeln. Auch wenn sich die aus der Praxis bekannten, porösen Partikel durch eine starke Adsorptionsleistung auszeichnen, hat sich das Einsammeln der mit den petrochemischen Substanzen befrachteten Partikel als kritisch herausgestellt. Weiterhin sind aus der Praxis Textilien bekannt, die mit der Maßgabe imprägniert sind, dass sie petrochemische Stoffe selektiv zu binden vermögen. Allerdings ist das Imprägnieren sehr aufwendig, sodass diese Vliese aufgrund der hohen Fertigungskosten keiner breiten Anwendung zugänglich sind.

Das Dokument WO 97/06222 beschreibt mehrschichtigen Filtermaterialen zum Adsorbieren von Ölen aus flüssigen Phasen, bestehend aus mindestens zwei Vliesen und einer dazwischenliegenden Filterschicht, wobei die Filterschicht aus einer Mischung von Gummimulch mit anderen Filterstoffen bzw. Beimengungen besteht.

Der Erfindung liegt daher das technische Problem zugrunde, ein Adsorptionsvlies anzugeben, das sich durch eine einfache Handhabbarkeit, einfache Herstellbarkeit und wirtschaftliche Einsetzbarkeit auszeichnet. Weiterhin liegt der Erfindung das technische Problem zugrunde, ein Verfahren zur Herstellung eines solchen Adsorptionsvlieses anzugeben.

Zur Lösung des technischen Problems lehrt die Erfindung ein Adsorptionsvlies zur Adsorption von petrochemischen Substanzen aus flüssigen Phasen mit zumindest einem Vlies, wobei auf zumindest eine Oberfläche des Vlieses ein Polymer aufgetragen ist, wobei das Polymer zumindest einen Adsorptionsstoff als Füllstoff enthält, welcher Adsorptionsstoff Mikroporen und/oder Mesoporen und/oder Makroporen aufweist. Petrochemische Substanzen meint im Rahmen der Erfindung Erdöl bzw. Rohöl, Produkte aus Rohöl bzw. Ölprodukte und organische, chemische Verbindungen. Zweckmäßigerweise sind mit dem erfindungsgemäßen Adsorptionsvlies Verunreinigungen, vorzugsweise organische Verbindungen und/oder wasserunlösliche Verbindungen aus flüssigen Phasen, beispielsweise Deponiesickerwässern adsorbierbar und/oder entfernbar. Gemäß einer Ausführungsform ist die Adsorption von unerwünschten Stoffen aus Biogasanlagen und empfohlenermaßen der Einsatz bei der Dekontaminierung von radioaktiv verseuchten Gewässern durch die Einlagerung von radioaktiv strahlenden Teilchen in dem Adsorptionsstoff möglich. Grundsätzlich ist es möglich, dass Kationen aus Metallsalzlösungen und vorzugsweise Schwermetallsalzlösungen von den erfindungsgemäßen Adsorptionsvliesen adsorbierbar sind.

Gemäß einer Ausführungsform eignet sich ein erfindungsgemäßes Adsorptionsvlies zur Adsorption von Geruchsstoffen aus der Gasphase, beispielsweise von Kerosindämpfen und/oder Benzindämpfen und/oder polychlorierten Biphenylen (PCB) aus einer Gasphase bzw. Gasatmosphäre. Bevorzugt eignet sich das erfindungsgemäße Adsorptionsvlies als Filter zur Abtrennung von Geruchsstoffen und/oder Schadstoffen aus der Kabinenluft eines Flugzeugs und/oder eines Kraftfahrzeugs.

Das Vlies ist empfohlenermaßen ein Wirrvlies und beinhaltet vorzugsweise Endlosfilamente und/oder Stapelfasern. Grundsätzlich ist es möglich, dass das Spinnvlies Meltblown-Fasern aufweist. Die das Vlies bildenden Fasern sind vorzugsweise aus einem synthetischen Harz, beispielsweise aus einem Polyolefin und bevorzugt aus einem Polyethylen und/oder Polypropylen gefertigt. Es ist möglich, dass die Fasern aus einem Polyamid und/oder einem Polyester, beispielsweise Polyethylenterephthalat, gebildet sind. Vorzugsweise ist das zur Herstellung der Fasern eingesetzte synthetische Harz ein Abfallmaterial. Zweckmäßigerweise ist das Vlies einlagig ausgebildet. In einer weiteren Ausführungsform ist das Vlies zumindest zweilagig bzw. mehrlagig ausgebildet. In einer besonders bevorzugten Ausführungsform ist das den Füllstoff enthaltende Polymer dauerhaft bzw. irreversibel mit den Fasern des Vlieses verbunden. Gemäß der Erfindung ist den Füllstoff enthaltende Polymer sandwichartig zwischen dem Vlies und einem Abdeckvlies angeordnet.

Vorteilhafterweise weist das Polymer einen Füllstoffanteil von 40 Gewichtsprozent bis 98 Gewichtsprozent und bevorzugt von 60 bis 98 Gewichtsprozent auf. Es hat sich bewährt, dass der poröse Füllstoff in eine hydrophobe Polymermatrix eingebettet ist. Gemäß einer vorteilhaften Ausführungsform weist der Adsorptionsstoff zumindest zwei poröse Füllstoffe auf, wobei ein Füllstoff im Wesentlichen Mesoporen und/oder Makroporen aufweist und ein weiterer Füllstoff im Wesentlichen Mikroporen besitzt. Es ist möglich, dass der Füllstoff dem weiteren Füllstoff vorgeschaltet ist. Dass der Adsorptionsstoff bzw. Füllstoff Mikroporen aufweist meint im Rahmen der Erfindung, dass ein Öffnungsquerschnitt der Poren kleiner ist als 2 nm. Mesoporen meint im Rahmen der Erfindung Poren mit einem Öffnungsquerschnitt von 2 bis 50 nm. Poren mit einem Öffnungsquerschnitt von mehr als 50 nm werden im Rahmen der Erfindung als Makroporen bezeichnet. Es hat sich bewährt, den Füllstoff hinsichtlich seiner Porengröße auf einen Einsatzzweck hin abzustimmen.

Das Polymer ist ein Synthesekautschuk oder ein Naturkautschuk. Als Synthesekautschuk kann beispielsweise zumindest ein Kautschuk aus der folgenden Gruppe eingesetzt werden: "Styrol-Butadien-Kautschuk (SBR), Butyl-Acrylnitril-Kautschuk, Butylkautschuk, Butadien-Kautschuk, Isopren-Kautschuk, Ethylen-Propylen-Copolymerisat, Ethylen-Propylen-Dien Perpolymerisat, Carboxylat Kautschuk, Epoxid Kautschuk, trans-Polypentenamer, halogenierter Butylkautschuk, Kautschuk aus 2-Chlor-Butadien, Ethylen-Vinylacetat-Copolymer, Epichlorhydrin, chemisch modifizierter Naturkautschuk". Es ist möglich, dass als Polymer ein Naturkautschuk, beispielsweise ein Naturlatex, eingesetzt wird. In einer bevorzugten Ausführungsform sind als Synthesekautschuk Abfallmaterialien aus der Synthesekautschukherstellung einsetzbar. Besonders bevorzugt ist der Synthesekautschuk ein Styrol-Butadien Kautschuk (SBR), der vorzugsweise aus Produktionsresten (Off-Spec-Material) der SBR-Herstellung beispielsweise für Autoreifen stammt.

Vorteilhafterweise ist das Polymer mit dem Vlies verklebt. Es hat sich bewährt, dass das den Füllstoff enthaltende Polymer als Emulsion auf das Vlies aufgebracht wird. Mit anderen Worten wird das Polymer in einer teilweise gelösten Form auf das Vlies aufgetragen. Die Emulsion wird dabei von dem den Füllstoff enthaltenden Polymer sowie einem Fluid, beispielsweise Wasser, gebildet. Das emulgierte Polymer dringt zweckmäßigerweise in Oberflächenunebenheiten der Fasern des Vlieses ein und verbindet sich nach dem Entfernen des Fluids auf diese Weise dauerhaft und vorzugsweise irreversibel mit den Fasern. Es ist möglich, dass das den Füllstoff enthaltende Polymer als Pulver bzw. Granulat auf das Vlies aufgebracht ist. Es empfiehlt sich, dass das Aggregat aus dem Vlies mit dem aufgetragenen, pulverförmigen Polymer mit der Maßgabe mit dem Abdeckvlies abgedeckt wird, dass das Polymer zwischen dem Vlies und dem Abdeckvlies gehalten bzw. fixiert wird.

Gemäß der Erfindung weist das Polymer einen Restwassergehalt von 2 bis 10 Gewichtsprozent und vorzugsweise von 3 bis 8 Gewichtsprozent und besonders bevorzugt von 3 bis 5 Gewichtsprozent auf.

Vorteilhafterweise weist der Adsorptionsstoff zumindest eine Komponente aus der Gruppe "Aktivkohle, Ruß, Zeolithe, Siliziumverbindung, Petrolkoks" auf. Ruß wird im Rahmen der Erfindung auch als "carbon black" bezeichnet. Es ist möglich, dass eine Oberfläche des Ruß gegebenenfalls durch eine künstliche Oxidation nachbehandelt ist. Als Ruß ist beispielsweise zumindest ein Ruß aus der Gruppe "Furnace-Ruß, Gasruß, Flammruß" einsetzbar. Es liegt im Rahmen der Erfindung, dass die Zeolithe eine synthetische und/oder natürliche Zeolithe ist. Vorteilhafterweise wird als Siliziumverbindung ein Silikat und bevorzugt ein Aluminiumsilikat eingesetzt. Gemäß einer Ausführungsform ist es möglich, dass als Siliziumverbindung eine Kieselsäure und vorzugsweise pyrogene Kieselsäure eingesetzt wird. Die eingesetzten Adsorptionsstoffe werden zweckmäßigerweise hinsichtlich ihrer Porosität mit der Maßgabe ausgewählt, dass bei einer vorgegebenen Anwendung des erfindungsgemäßen Adsorptionsvlieses eine optimale Adsorption eines zu adsorbierenden Fluides erfolgt. Gemäß einer vorteilhaften Ausführungsform enthält das Polymer einen im Wesentlichen Mesoporen und/oder Makroporen aufweisenden Füllstoff aus der Gruppe "Siliziumverbindung, Zeolithe, Ruß, Petrolkoks" der besonders bevorzugt der hauptsächlich Mikroporen aufweisenden Aktivkohle vorgeschaltet ist. Dies meint im Rahmen der Erfindung, dass in dem Polymer sowohl ein Füllstoff aus der Gruppe "Siliziumverbindung, Zeolithe, Ruß, Petrolkoks" und Aktivkohle vorliegen. Auf diese Weise wird zuverlässig ausgeschlossen, dass die Poren der Aktivkohle durch größere Moleküle bzw. Molekülketten blockiert werden und die Aktivkohle hinsichtlich ihres Adsorptionsvermögens deaktiviert wird.

Es empfiehlt sich, dass das Polymer zumindest einen Hilfsstoff enthält, wobei als Hilfsstoff zumindest ein Pigment, vorzugsweise ein Weißpigment einsetzbar ist. Als Weißpigment ist beispielsweise Titandioxid oder Aluminiumoxid einsetzbar. Der Hilfsstoff wird mit der Maßgabe in dem Polymer angeordnet, dass ein möglicherweise farbiger oder schwarzer Adsorptionsstoff hinsichtlich seiner Sichtbarkeit von dem Hilfsstoff überdeckt wird. Mit anderen Worten wird das Erscheinungsbild eines den Hilfsstoff aufweisenden Polymers von dem zugesetzten Hilfsstoff bestimmt. Auf diese Weise kann ausgeschlossen werden, dass Aktivkohle und/oder Ruß und/oder Petrolkoks enthaltende Adsorptionsvliese eine unvorteilhaft dunkle bzw. schwarze Oberfläche aufweisen.

Es empfiehlt sich, dass das Vlies und/oder das Polymer Auftriebselemente bzw. Auftriebskörper aufweist/aufweisen, sodass gemäß einer vorteilhaften Ausführungsform die Dichte des erfindungsgemäßen Adsorptionsvlieses geringer als die Dichte von beispielsweise Wasser ist. Auf diese Weise wird sichergestellt, dass ein beispielsweise zur Reinigung von Wasser nach einem Ölunfall oder als Ölbarriere auf Wasser eingesetztes Adsorptionsvlies auch bei starken Wellenbewegungen nicht unter die Oberfläche des Wassers absinkt. Dadurch wird gewährleistet, dass das Adsorptionsvlies immer mit dem auf der Wasseroberfläche aufschwimmenden Öl in Kontakt tritt und infolgedessen das aufschwimmende Öl von dem Füllstoff des Polymers adsorbiert wird. Gemäß einer vorteilhaften Ausführungsform bestehen die Auftriebselemente im Wesentlichen aus einem Schaumkunststoff und besonders bevorzugt aus einem Polystyrol. Zweckmäßigerweise weist der Schaumkunststoff eine Dichte von 0,015 kg/l bis 0,05 kg/l, vorzugsweise von 0,02 kg/l bis 0,04 kg/l und besonders bevorzugt von ungefähr 0,03 kg/l auf. Vorteilhafterweise wird granulatförmiges Polystyrol in das Vlies und/oder das Polymer eingearbeitet. Empfohlenermaßen sind die Auftriebselemente in einem sandwichartigen Adsorptionsvlies, das ein Vlies und ein Abdeckvlies aufweist, zwischen dem Vlies und dem Abdeckvlies angeordnet.

Weiterhin lehrt die Erfindung ein Verfahren zur Herstellung eines Adsorptionsvlieses, wobei ein Vlies bereit gestellt wird, wobei auf zumindest eine Oberfläche des Vlieses eine vorzugsweise wässrige Emulsion aufgetragen wird, wobei die Emulsion ein Polymer und zumindest ein Adsorptionsmittel als Füllstoff enthält, wobei das mit der Emulsion beschichtete Vlies mit der Maßgabe getrocknet wird, dass das Polymer den Füllstoff bindet bzw. festhält und dass das Polymer auf dem Vlies fixiert wird. Das Vlies wird zweckmäßigerweise durch das Ablegen einer spunbond-Fadenschar bzw. Filamentschar auf einem Ablegesiebband erhalten. Weiterhin ist es möglich, dass das Vlies durch das Ablegen von schmelzgeblasenen Filamenten erzeugt wird. Gemäß einer alternativen Ausführungsform wird das Vlies durch Kardieren hergestellt. Es ist möglich, dass das Vlies bereitgestellt wird, indem das Vlies von einer Rolle abgewickelt wird.

Die Emulsion wird erhalten, indem empfohlenermaßen das Polymer in einem Fluid, vorzugsweise Wasser, zu einer Polymeremulsion emulgiert wird. Die Polymeremulsion weist im Rahmen der Erfindung einen Polymeranteil von vorzugsweise 10 bis 30 Gewichtsprozent und vorteilhafterweise von ungefähr 25 Gewichtsprozent und einen Wasseranteil von zweckmäßigerweise 70 bis 90 Gewichtsprozent und bevorzugt von ungefähr 75 Gewichtsprozent auf. Zu der Polymeremulsion wird empfohlenermaßen der Füllstoff mit der Maßgabe gegeben, dass eine Emulsion mit einem Füllstoffanteil von 60 bis 90 Gewichtsprozent erhalten wird. Die Emulsion weist gemäß einer Ausführungsform einen Polymergehalt von bis zu 25 Gewichtsprozent auf. Vorteilhafterweise enthält die Emulsion ungefähr 5 bis 40 Gewichtsprozent und vorzugsweise von 10 bis 20 Gewichtsprozent Wasser. Grundsätzlich ist es möglich, dass der Emulsion Auftriebselemente, vorzugsweise granulatförmiges Polystyrol, zugesetzt werden. Besonders bevorzugt ist das Auftriebselement eine lipophile Substanz, mit der das Adsorptionsvermögen des Adsorptionsvlieses zusätzlich erhöht wird. Mit anderen Worten ist mit den vorzugsweise lipophilen Auftriebselementen beispielsweise eine organische Verbindung adsorbierbar.

Gemäß einer bevorzugten Ausführungsform des erfindungsgemäßen Verfahrens wird lediglich eine Oberfläche des Vlieses empfohlenermaßen zumindest bereichsweise und vorteilhafterweise vollständig bzw. im Wesentlichen vollständig mit der Emulsion beschichtet. Es ist möglich, dass beide Oberflächen des Vlieses zumindest bereichsweise und empfohlenermaßen vollständig bzw. im Wesentlichen vollständig mit der Emulsion beschichtet werden. Zweckmäßigerweise ist eine Viskosität der Emulsion mit der Maßgabe eingestellt, dass die Emulsion fließfähig und/oder pumpbar ist.

Nach dem Aufbringen der Emulsion auf das Vlies wird das Vlies empfohlenermaßen durch Erwärmen derart getrocknet, dass ein Restwassergehalt des Polymers beispielsweise 2 bis 10 Gewichtsprozent, vorzugsweise 2 bis 8 Gewichtsprozent und besonders bevorzugt 3 bis 5 Gewichtsprozent beträgt. Es hat sich bewährt, dass beim Trocknen Temperaturen von maximal 180 °C eingestellt werden. Es empfiehlt sich, die Temperatur beim Trocknen mit der Maßgabe einzustellen, dass eine Faserstruktur des Vlieses beibehalten wird bzw. nicht zerstört wird. Gemäß einer Ausführungsform wird das polymerbeschichtete Vlies in einer Stickstoffatmosphäre getrocknet.

In einer alternativen Ausführungsform wird der Emulsion ein lösliches Salz mit der Maßgabe zugegeben, dass das den Füllstoff und gegebenenfalls die Auftriebselemente enthaltende Polymer als Polymergranulat bzw. Polymerpulver aus der Emulsion ausgefällt wird. Nach dem Abtrennen des Fluids wird das Polymerpulver getrocknet und zumindest bereichsweise und vorzugsweise vollständig bzw. im Wesentlichen vollständig das Vlies abdeckend auf das Vlies aufgebracht. Es ist möglich, dass das den Füllstoff enthaltende Polymer lediglich auf einer Oberfläche des Vlieses angeordnet wird. In einer anderen Ausführungsform wird das den Füllstoff enthaltende Polymer auf beide Ober-flächen - also auf eine Oberseite und eine Unterseite - auf das Vlies aufgebracht.

Gemäß der Erfindung wird bzw. werden die mit dem Polymer beschichtete Oberfläche bzw. beschichteten Oberflächen des Vlieses jeweils mit zumindest einem Abdeckvlies abgedeckt, wobei das Abdeckvlies mit dem Vlies und/oder dem Polymer verbunden wird. Das Vlies und das Abdeckvlies bilden gleichsam den Boden und die Abdeckung eines Sandwichs, zwischen denen das den Füllstoff enthaltende Polymer aufgenommen ist. Das Abdeckvlies wird dabei vorteilhafterweise irreversibel mit dem Vlies und/oder dem Polymer verbunden. Gemäß einer Ausführungsform wird das Abdeckvlies durch Umschlagen bzw. Falten des Vlieses erhalten bzw. erzeugt. Es liegt im Rahmen der Erfindung, dass das Vlies und das Abdeckvlies identisch bzw. im Wesentlichen identisch ausgebildet sind. Grundsätzlich ist es möglich, dass das Vlies und das Abdeckvlies voneinander verschieden bzw. unterschiedlich ausgebildet sind.

Der Erfindung liegt die Erkenntnis zugrunde, dass sich ein erfindungsgemäßes Adsorptionsvlies durch eine besondere Nachhaltigkeit bei der Verwendung zur Säuberung bzw. Dekontamination von Wasser eignet. Wesentlich dabei ist, dass zur Sicherstellung einer optimalen Funktionssicherheit eines erfindungsgemäßen Adsorptionsvlieses überraschenderweise der Einsatz von Produktionsresten ausreichend ist. Insofern zeichnet sich das erfindungsgemäße Adsorptionsvlies durch eine besondere Nachhaltigkeit und Wirtschaftlichkeit aus. Aufgrund der besonderen Wirtschaftlichkeit bei der Herstellung ist das erfindungsgemäße Adsorptionsvlies in einem breiten Einsatzspektrum anwendbar, ohne dass eine unvorhersehbare Kostenentwicklung beim Einsatz eines solchen Adsorptionsvlieses zu befürchten ist. In diesem Zusammenhang ist insbesondere auf das einfache und problemlose, großflächige Auslegen des erfindungsgemäßen Adsorptionsvlieses in Kombination mit dem unkritischen Einholen bzw. Sicherstellen des mit dem Schadstoff beladenen Adsorptionsvlieses zu verweisen.

Weiterhin liegt der Erfindung die Erkenntnis zugrunde, dass sich das erfindungsgemäße Adsorptionsvlies ebenso hervorragend zur Reinigung von gasförmigen Medien, beispielsweise der Atemluft in Flugzeugkabinen, eignet. In diesem Zusammenhang ist insbesondere auf die hohe innere Oberfläche (> 1.000 m²/g) von Aktivkohle zu verweisen, die eine zuverlässige Adsorption von Benzindämpfen aus der Atemluft gewährleistet. Durch die Kombination verschiedener Füllstoffe kann die Adsorption von Schadstoffen, beispielsweise aus der Atemluft in Fahrzeug- und/oder Flugzeugkabinen, weiter optimiert werden. In diesem Zusammenhang liegt der Erfindung die Erkenntnis zugrunde, dass sich ein erfindungsgemäßes Adsorptionsvlies vollständig bzw. im Wesentlichen vollständig regenerieren lässt. Mit anderen Worten ist eine vollständige, kontrollierte Desorption der adsorbierten Schadstoffe möglich, die nach der Desorption einer Verbrennung zuführbar sind. Aufgrund des einstellbaren Erscheinungsbildes eines erfindungsgemäßen Adsorptionsvlieses eignet sich ein solches Adsorptionsvlies auch für Anwendungszwecke, in denen das optische Erscheinungsbild eine besondere Bedeutung hat. So kann ein erfindungsgemäßes Adsorptionsvlies faltenfilterähnlich in einem Luftfiltersystem angeordnet werden, wobei es über eine ansprechende, einheitlich weiße Oberfläche verfügt.

Der Erfindung liegt weiterhin die Erkenntnis zugrunde, dass sich ein erfindungsgemäßes Adsorptionsvlies mit dem erfindungsgemäßen Verfahren problemlos herstellen lässt. Wesentlich bei dem erfindungsgemäßen Verfahren ist die einfache Applizierbarkeit der pumpbaren bzw. pastösen, das Polymer enthaltenden Emulsion auf das Vlies. Ein aufwendiges Imprägnieren entfällt daher. Vorteilhafterweise wird durch das erfindungsgemäße Aufbringen der Emulsion und das anschließende Trocknen gewährleistet, dass eine innige, dauerhafte Verbindung zwischen den Fasern des Vlieses und des Polymers erhalten wird, sodass während der Anwendung ein Lösen des Polymers von dem Vlies nicht zu befürchten ist. Wesentlich ist weiterhin, dass durch das Vlies und gegebenenfalls das ergänzende Abdeckvlies die mechanischen Eigenschaften des Adsorptionsvlieses an die entsprechenden Einsatzgebiete problemlos und zuverlässig anpassbar sind.

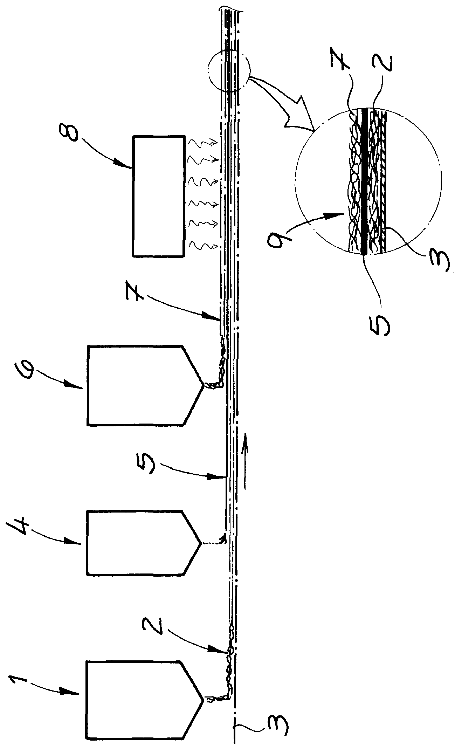

Nachfolgend wird die Erfindung anhand einer lediglich ein Ausführungsbeispiel darstellenden Zeichnung detailliert erläutert. Die Figur zeigt schematisch das Verfahren zur Herstellung des erfindungsgemäßen Spinnvlieses.

Gemäß dem dargestellten, schematischen Verfahren wird von einer ersten Vliesausgabestation 1 ein Spinnvlies 2 auf eine Fördereinrichtung 3 abgelegt. Mit einer Beschichtungseinrichtung 4 wird eine einen Füllstoff und ein Polymer enthaltende Emulsion 5 auf das Vlies 2 gleichförmig aufgetragen. Ein Aggregat aus dem Vlies 2 und der Emulsion 5 wird in der zweiten Vliesausgabestation 6 mit einem Abdeckvlies 7 unter Ausbildung eines dreischichtigen Aggregates abgedeckt. Das noch die einen hohen Wassergehalt aufweisende Emulsion beinhaltende, dreischichtige Aggregat wird nachfolgend einer Trockenstation 8 zugeführt, in der das dreischichtige Aggregat zur Ausbildung des dreischichtigen Adsorptionsvlieses 9 getrocknet wird. Durch die Trocknung in der Trockenstation 8 wird das in der Emulsion 5 enthaltende Polymer irreversibel mit dem Vlies 2 und dem Abdeckvlies 7 verbunden, was in der Ausschnittsvergrößerung der Figur dargestellt ist.

## Patentansprüche

1. Adsorptionsvlies, zur Adsorption von petrochemischen Substanzen aus flüssigen Phasen, mit zumindest einem Vlies (2), wobei auf zumindest einer Oberfläche des Vlieses (2) ein Polymer in Form eines Synthesekautschuks oder Naturkautschuks aufgetragen ist, wobei das Polymer zumindest einen Adsorptionsstoff als Füllstoff enthält, welcher Adsorptionsstoff Mikroporen und/oder Mesoporen und/oder Makroporen aufweist, wobei das Polymer einen Restwassergehalt von 2 bis 10 Gewichtsprozent aufweist und wobei die mit dem Polymer beschichtete Oberfläche des Vlieses (2) mit zumindest einem Abdeckvlies (7) abgedeckt ist, wobei das Abdeckvlies (7) mit dem Vlies (2) und/oder dem Polymer verbunden ist.

2. Adsorptionsvlies nach Anspruch 1, wobei als Synthesekautschuk Abfallmaterialien aus der Synthesekautschukherstellung einsetzbar sind.

3. Adsorptionsvlies nach einem der Ansprüche 1 oder 2, wobei der Synthesekautschuk ein Styrol-Butadien-Kautschuk ist.

4. Adsorptionsvlies nach einem der Ansprüche 1 bis 3, wobei das Polymer mit dem Vlies verklebt ist.

5. Adsorptionsvlies nach einem der Ansprüche 1 bis 4, wobei der Adsorptionsstoff zumindest eine Komponente aus der Gruppe Aktivkohle, Ruß, Zeolithe, Siliziumverbindung, Petrolkoks aufweist.

6. Adsorptionsvlies nach einem der Ansprüche 1 bis 5, wobei das Polymer zumindest einen Hilfsstoff enthält, wobei als Hilfsstoff zumindest ein Pigment, vorzugsweise ein Weißpigment, einsetzbar ist.

7. Verfahren zur Herstellung eines Adsorptionsvlieses nach einem der Ansprüche 1 bis 6, wobei ein Vlies (2) bereitgestellt wird, wobei auf zumindest eine Oberfläche des Vlieses (2) eine vorzugsweise wässrige Emulsion (5) aufgetragen wird, wobei die Emulsion (5) ein Polymer in Form eines Synthesekautschuks oder Naturkautschuks und zumindest ein Adsorptionsmittel als Füllstoff enthält, wobei das mit der Emulsion (5) beschichtete Vlies (2) mit der Maßgabe getrocknet wird, dass das Polymer den Füllstoff bindet bzw. festhält, dass das Polymer einen Restwassergehalt von 2 bis 10 Gewichtsprozent aufweist und dass das Polymer auf dem Vlies (2) fixiert wird und wobei die mit dem Polymer beschichtete Oberfläche des Vlieses (2) mit zumindest einem Abdeckvlies (7) abgedeckt wird, wobei das Abdeckvlies (7) mit dem Vlies (2) und/oder dem Polymer verbunden wird.

## Claims

1. An adsorbent web for adsorbing petrochemical substances from liquid phases, having at least one web (2), wherein a polymer in the form of a synthetic rubber or natural rubber is applied to at least one face of the web (2), wherein the polymer contains at least one adsorbent material as a filler, said adsorbent material exhibiting micropores and/or mesopores and/or macropores, wherein the polymer has a residual water content of 2 to 10 percent by weight and wherein the face of the web (2) coated with the polymer is covered with at least one covering web (7), wherein the covering web (7) is bonded with the web (2) and/or with the polymer.

2. The adsorbent web as claimed in claim 1, wherein waste materials from synthetic rubber production may be used as the synthetic rubber.

3. The adsorbent web as claimed in claim 1 or claim 2, wherein the synthetic rubber is a styrene-butadiene rubber.

4. The adsorbent web as claimed in one of claims 1 to 3, wherein the polymer is bonded to the web.

5. The adsorbent web as claimed in one of claims 1 to 4, wherein the adsorbent material contains at least one component formed from the group formed by activated charcoal, carbon black, zeolites, silicon compounds, and petroleum coke.

6. The adsorbent web as claimed in one of claims 1 to 5, wherein the polymer contains at least one auxiliary agent, wherein at least one pigment, preferably a white pigment, may be used as the auxiliary agent.

7. A process for producing an adsorbent web as claimed in one of claims 1 to 6, wherein a web (2) is provided, wherein a preferably aqueous emulsion (5) is applied to at least one face of the web (2), wherein the emulsion (5) contains a polymer in the form of a synthetic rubber or natural rubber and at least one adsorbent material as the filler, wherein the web (2) coated with the emulsion (5) is dried in a manner such that the polymer binds or retains the filler, such that the polymer exhibits a residual water content of 2 to 10 percent by weight and such that the polymer is fixed onto the web (2), and wherein the face of the web (2) coated with the polymer is covered with at least one covering web (7), wherein the covering web (7) is bonded with the web (2) and/or with the polymer.

## Revendications

1. Non-tissé d'adsorption destiné à adsorber des substances pétrochimiques présentes dans des phases liquides, comportant au moins un non-tissé (2), au moins une surface du non-tissé (2) étant pourvue d'un polymère sous forme d'un caoutchouc de synthèse ou caoutchouc naturel, ledit polymère contenant au moins un adsorbant en tant que charge, ledit adsorbant présentant des micropores et/ou mésopores et/ou macropores, ledit polymère présentant une teneur résiduelle en eau comprise entre 2 et 10 pour cent en poids et la surface du non-tissé (2), laquelle est revêtue dudit polymère, étant recouverte par au moins un non-tissé de couverture (7), le non-tissé de couverture (7) étant relié au non-tissé (2) et/ou audit polymère.

2. Non-tissé d'adsorption selon la revendication 1, le caoutchouc de synthèse mis en oeuvre pouvant correspondre à des déchets issus de la production de caoutchouc de synthèse.

3. Non-tissé d'adsorption selon l'une des revendications 1 ou 2, ledit caoutchouc de synthèse étant un caoutchouc styrène-butadiène.

4. Non-tissé d'adsorption selon l'une des revendications 1 à 3, ledit polymère étant assemblé avec ledit non-tissé par collage.

5. Non-tissé d'adsorption selon l'une des revendications 1 à 4, ledit adsorbant comportant au moins un composant issu du groupe de charbon actif, noir de carbone, zéolithes, composé de silicium, coke de pétrole.

6. Non-tissé d'adsorption selon l'une des revendications 1 à 5, ledit polymère contenant au moins un agent auxiliaire, ledit agent auxiliaire mis en oeuvre correspondant à au moins un pigment, de préférence à un pigment blanc.

7. Procédé de fabrication d'un non-tissé d'adsorption selon l'une des revendications 1 à 6, consistant à préparer un non-tissé (2), à appliquer une émulsion (5) préférentiellement aqueuse sur au moins une surface du non-tissé (2), l'émulsion (5) contenant un polymère sous forme d'un caoutchouc de synthèse ou caoutchouc naturel et au moins un adsorbant en tant que charge, à faire sécher le non-tissé (2) revêtu de l'émulsion (5) de manière à ce que ledit polymère vienne lier et/ou retenir ladite charge, que ledit polymère présente une teneur en eau résiduelle comprise entre 2 et 10 pour cent en poids et que ledit polymère soit fixé sur le non-tissé (2), puis à recouvrir la surface du non-tissé (2), laquelle est revêtue dudit polymère, par au moins un non-tissé de couverture (7), le non-tissé de couverture (7) étant relié au non-tissé (2) et/ou audit polymère.
